(19) Europäisches Patentamt
European Patent Office
Office européen des brevets

(11) **EP 2 357 102 B1**

(12) **EUROPÄISCHE PATENTSCHRIFT**

(45) Veröffentlichungstag und Bekanntmachung des Hinweises auf die Patenterteilung:
**28.08.2013 Patentblatt 2013/35**

(51) Int Cl.:
***B60H 1/00*** *(2006.01)*     ***B60H 1/03*** *(2006.01)*

(21) Anmeldenummer: **11154769.1**

(22) Anmeldetag: **17.02.2011**

(54) **Heizsystem für ein elektrisch antreibbares Fahrzeug und Betriebsverfahren**

Heating system for an electric vehicle and operating method

Système de chauffage pour un véhicule pouvant être entraîné de manière électrique et procédé de fonctionnement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2010 DE 102010002018**

(43) Veröffentlichungstag der Anmeldung:
**17.08.2011 Patentblatt 2011/33**

(73) Patentinhaber: **Behr GmbH & Co. KG**
**70469 Stuttgart (DE)**

(72) Erfinder:
- **Grünwald, Jürgen**
  **71638 Ludwigsburg (DE)**
- **Neumeister, Dirk**
  **70374 Stuttgart (DE)**

(74) Vertreter: **Grauel, Andreas et al**
**Grauel IP**
**Patentanwaltskanzlei**
**Presselstrasse 10**
**70191 Stuttgart (DE)**

(56) Entgegenhaltungen:
EP-A2- 1 621 377     DE-A1-102006 042 160
DE-A1-102007 044 466     US-A1- 2008 028 768

- **BURK R ET AL: "INTEGRALES KLIMASYSTEM FUER ELEKTROAUTOMOBILE", ATZ AUTOMOBILTECHNISCHE ZEITSCHRIFT, VIEWEG PUBLISHING, WIESBADEN, DE, Bd. 94, Nr. 11, 1. November 1992 (1992-11-01), Seiten 582-588, XP000321845, ISSN: 0001-2785**

**Beschreibung**

Die Erfindung betrifft ein Heizsystem für ein elektrisch antreibbares Fahrzeug nach dem Oberbegriff des Anspruchs 1 sowie ein Betriebsverfahren für ein solches Heizsystem. Ein gattungsgemäßes Heizsystem ist in der DE 10 2006 042 160 A1 offenbart.

Aus der Entwicklung von elektrisch antreibbaren Fahrzeugen ist die Problematik bekannt, dass aufgrund der im Vergleich zum Antrieb mit Verbrennungsmotoren geringen Abwärmeleistungen eine Heizung eines Passagierbereichs problematisch ist.

Es ist die Aufgabe der Erfindung, ein Heizsystem für ein elektrisch antreibbares Fahrzeug sowie ein Betriebsverfahren dafür anzugeben, durch die eine gespeicherte elektrische Energie möglichst sparsam verwendet wird.

Diese Aufgabe wird für ein eingangs genanntes Heizsystem erfindungsgemäß mit den kennzeichnenden Merkmalen des Anspruchs 1 gelöst. Durch das Vorsehen des Weiteren thermoelektrischen Wärmepumpenglieds an dem ersten Wärmeübertrager wird eine Kaskadenschaltung der zumindest zwei Wärmepumpenglieder realisierbar, wobei jeweils eine kältere Seite des einen Wärmepumpenglieds mit der jeweils wärmeren Seite des anderen Wärmepumpenglieds thermisch verbunden ist. Die thermische Verbindung der Wärmepumpenglieder wird dabei durch den Kühlkreislauf realisiert.

Bei einer bevorzugten Ausführungsform ist es daher vorgesehen, dass der erste Wärmeübertrager und der zweite Wärmeübertrager durch den Kühlkreislauf in unmittelbarer thermischer Verbindung stehen. In bevorzugter Detailgestaltung erfolgt dies ohne dazwischen in dem Kühlkreislauf angeordnete Wärmequellen oder Wärmesenken.

Unter einem elektrisch antreibbaren Fahrzeug im Sinne der Erfindung ist grundsätzlich jedes Fahrzeug zu verstehen, dass zumindest zeitweise nur elektrisch, also ohne einen ergänzend laufenden Verbrennungsmotor, angetrieben wird. Insbesondere sind dies reine Elektrofahrzeuge und Vollhybridfahrzeuge. In besonders bevorzugter Ausführung handelt es sich um reine Elektrofahrzeuge, für die der Einfluss einer Heizung auf die Reichweite des Fahrzeugs besonders bedeutsam ist. Eine Antriebskomponente im Sinne der Erfindung kann jede Abwärme erzeugende Komponente des Fahrzeugantriebs sein, wie etwa ein Elektromotor oder eine Leistungselektronik. Auch eine an den Kühlkreislauf angebundene Bremse ist hierunter zu verstehen.

Ein thermoelektrisches Wärmepumpenglied im Sinne der Erfindung ist besonders bevorzugt als Peltier-Element ausgebildet, kann aber grundsätzlich auch anders ausgebildet sein.

Der Passagierbereich des Fahrzeugs ist im Sinne der Erfindung so aufzufassen, dass eine gewünschte Nutztemperatur an verschiedenen Bereichen alternativ oder ergänzend einstellbar ist. Das thermoelektrische Wärmepumpenglied kann zum Beispiel die Luft im Passagierbereich, einen Sitz, ein Lenkrad, einen Becherhalter und/oder Ähnliches thermisch konditionieren. Es versteht sich, dass mehrere, räumlich getrennte Wärmepumpenglieder für den Passagierbereich vorgesehen sein können.

Allgemein vorteilhaft ist es vorgesehen, dass eine Temperatur des Kühlkreislaufs zwischen den beiden Wärmepumpengliedern zumindest in einer regelmäßigen Betriebsart in einem Bereich zwischen einer Nutztemperatur des Passagierbereichs und einer Temperatur der Umgebungsluft liegt. Hierdurch ist eine den Gesamtwirkungsgrad verbessernde Kaskadenschaltung der Wärmepumpenglieder realisiert. Je nach Kühlbetrieb oder Heizbetrieb pumpt dabei das eine Wärmepumpenglied Wärme von dem Passagierbereich in den Kühlkreislauf und das andere Wärmepumpenglied Wärme von dem Kühlkreislauf in den Außenraum, oder umgekehrt.

Bei einer allgemein vorteilhaften Ausführungsform der Erfindung ist an dem Kühlkreislauf ein Widerstands-Heizglied, besonders bevorzugt ein PTC-Heizglied (PTC = Positive Temperature Coeffizient), angeordnet ist. Hierdurch kann im Bedarfsfall eine schnelle Aufheizung erfolgen. Insbesondere kann mit einem PTC-Heizglied eine schnelle Vorkonditionierung des Kühlkreiskaufs und gegebenenfalls angeschlossener thermischer Massen erfolgen, während das Fahrzeug an einer stationären Energieversorgung angeschlossen ist.

Bei einer möglichen Ausführungsform der Erfindung ist ein weiterer Kühlkreislauf, insbesondere zur Kühlung des Energiespeichers, über ein weiteres Wärmepumpenglied thermisch an den Kühlkreislauf angebunden. Dies ist zumindest dann vorteilhaft, wenn die am Energiespeicher, etwa einer Lithium-Ionen-Batterie zu etablierende Temperatur unterhalb der Kühlkreislauftemperatur liegt. Eine typische Betriebstemperatur des Kühlkreislaufs liegt bei etwa 60 °C, wogegen die Temperatur eines Kühlkreises für eine Lithium-Ionen-Batterie im Bereich 10 °C bis 30 °C liegen sollte, um eine optimale Lebenserwartung der Batterie sicherzustellen.

Die Aufgabe der Erfindung wird zudem für eingangs genanntes Betriebsverfahren mit den Merkmalen des Anspruchs 6 gelöst. Die Bestimmung, also etwa Messung oder auch Regelung der Temperatur des Kühlkreislaufs kann zum Beispiel im Bereich eines der Wärmepumpenglieder erfolgen. Hierdurch kann ein Kaskadenbetrieb der Wärmepumpenglieder ermöglicht werden, etwa wenn die Temperatur sich gezielt zwischen der Außentemperatur und der Nutztemperatur befindet.

Besonders bevorzugt ist daher der Schritt vorgesehen:

- Vergleichen der Kühlkreislauftemperatur mit einer Nutztemperatur und der Umgebungstemperatur, und durchführen von Schritt b. nur dann, wenn die Kühlkreislauftemperatur zwischen der Umgebungstemperatur und der Nutztemperatur liegt.

Bei einer zweckmäßigen Weiterbildung umfasst das Verfahren den Schritt:

- Aufheizen oder Abkühlen eines Wärmespeichers, bevorzugt eines Fahrzeuginnenraums, des Kühlkreises und/oder der Antriebskomponente, während einer Verbindung des Fahrzeugs mit einer stationären Energiequelle. Hierdurch kann insbesondere im Heizfall eine günstige und nicht von der Fahrzeugbatterie abhängige Wärmereserve geschaffen werden. Insbesondere können thermische Massen gezielt aufgeheizt werden.

Bei einer besonders bevorzugten Ausführungsform der Erfindung umfasst das Verfahren den Schritt:

- Betreiben zumindest des zweiten Wärmepumpenglieds mit einem Betriebsstrom nicht oberhalb eines Grenzstroms $I_G$, der im Wesentlichen durch folgende Gleichung gegeben ist:

$$I_G = \frac{Se}{R} \cdot T - \sqrt{\left(\frac{Se}{R} T\right)^2 - \frac{2 \cdot \left[KA \cdot \Delta T + \frac{\partial Q_C}{\partial t}\right]}{R}}$$

mit

T: Temperatur der Kaltseite des Wärmepumpenglieds,
$\Delta T$: Temperaturdifferenz über dem Wärmepumpenglied,
Se: Seebeck-Koeffizient,
R: Ohmscher Widerstand,
KA: Wärmedurchgangskoeffizient des Wärmepumpenglieds,
$\partial Q_C/\partial t$: Pumpleistung des Wärmepumpenglieds.

Durch die vorgegebene Optimierung des elektrischen Stroms in Abhängigkeit von der gewünschten Pumpleistung kann der Wirkungsgrad (COP) des thermoelektrischen Wärmepumpenglieds, insbesondere im Fall eines Peltier-Elements, jeweils maximiert werden. Dies führt zu einem insgesamt optimierten Verbrauch an elektrischer Energie und somit zu einer maximalen Reichweite des Fahrzeugs.

Allgemein vorteilhaft umfasst das Verfahren den Schritt:

- Erwärmen des Kühlkreislaufs mittels eines wasserseitigen Widerstands-Heizglieds, insbesondere eines PTC-Heizglieds.

Hierdurch kann eine besonders schnelle Aufheizung erzielt werden, je nach Betriebsbedingungen mittels der fahrzeugeigenen Energiequelle oder auch einer stationären Energiequelle.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.

Fig. 1     zeigt ein erstes Ausführungsbeispiel eines erfindungsgemäßen Heizsystems.
Fig. 2     zeigt das Diagramm der Pumpleistung eines thermoelektrischen Wärmepumpenglieds in Abhängigkeit von dem elektrischen Betriebsstrom.

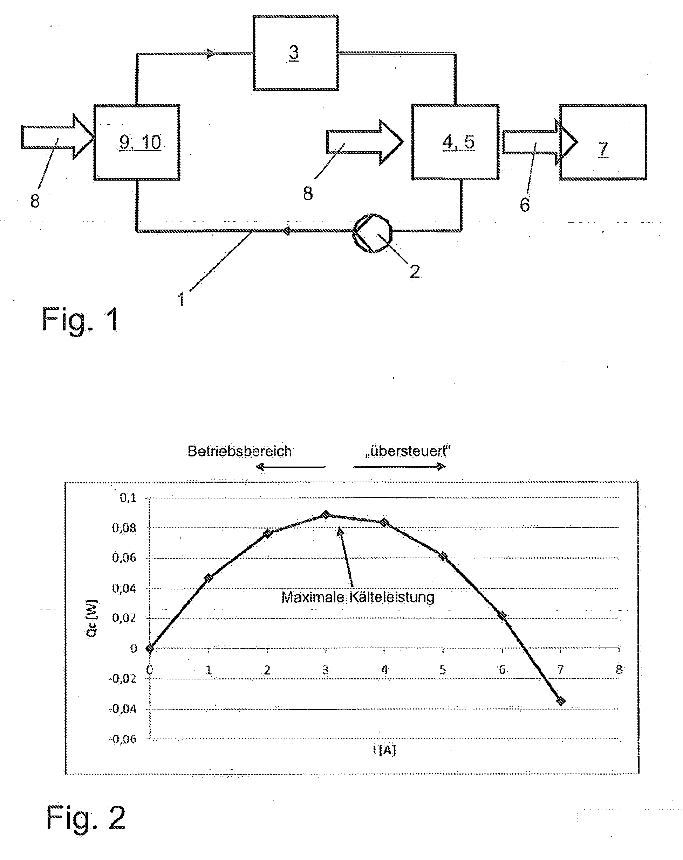

Das in Fig. 1 gezeigte Heizsystem für ein Elektrofahrzeug umfasst einen Kühlkreislauf 1, in dem ein Kühlmittel, zum Beispiel ein Wasser-Glykol-Gemisch, mittels einer Umwälzpumpe 2 umgewälzt wird. Es durchströmt einen ersten, mit Außenluft 8 im Austausch stehenden Wärmeübertrager 9 und transportiert Abwärme von Antriebskomponenten 3, vorliegend einem Elektromotor eines Fahrzeugantriebs sowie einer zu dessen Regelung vorgesehenen Leistungselektronik, zu einem zunächst zu einem zweiten Wärmeübertrager 4.

An den Wärmeübertrager 4 ist ein thermoelektrisches Wärmepumpenglied 5 angegliedert. Dabei handelt es sich um ein Peltier-Element, dessen eine Seite in thermischem Kontakt mit dem Wärmeübertrager 4 bzw. dem Kühlkreislauf steht.

Wärmeübertrager 4 und Peltier-Element 5 sind in der Zeichnung als integrierte Einheit dargestellt. Bei der Bauform im Sinne der Erfindung kann der Wärmeübertrager je nach Anforderungen nur zwischen der einen Seite des Peltier-Elements und das Kühlmittel angebunden sein, oder auch zusätzliche Strukturen zum unmittelbaren Wärmetausch zwischen dem Kühlmittel und dem Passagierbereich, etwa zur Luftkonditionierung, aufweisen.

Das Peltier-Element 5 steht mit seiner anderen Seite mit einem Passagierbereich im thermischen Austausch. Im Einzelnen handelt es sich dabei bevorzugt um Luft 6, die nach einem Heizen oder Kühlen durch das Peltier-Element 5 einem Passagierraum 7 zugeführt wird.

Unmittelbar stromabwärts des Wärmeübertragers 4 mit dem Peltier-Element 5, ohne dass weitere Wärmequellen oder Wärmesenken in diesem Abschnitt angebunden sind, ist der erste, äußere Wärmeübertrager 9 in dem Kühlkreislauf angeordnet. An dem ersten Wärmeübertrager 9 ist zudem ein weiteres Wärmepumpenglied 10 angeordnet, das als Peltier-Element ausgebildet ist und dessen eine Seite mit dem Kühlmittel thermisch verbunden ist. Ebenso wie bei dem zweiten Wärmeübertrager kann der erste Wärmeübertrager 9 ausschließlich zum Wärmetransport zwischen dem Kühlmittel und dem Peltier-Element 10 ausgebildet sein oder auch Strukturen umfassen, die einen unmittelbaren Wärmeaustausch zwischen Kühlmittel und Umgebungsluft bewirken.

Aufgrund der thermischen Verbindung der beiden Peltier-Elemente 5, 10 durch den Kühlmittelstrom liegt eine thermisch serielle Verschaltung bzw. Kaskadenanordnung der Peltierelemente vor.

Zumindest in geeigneten Betriebszuständen, in denen die Kühlmitteltemperatur zwischen einer Umgebungstemperatur und einer Nutztemperatur des Passagierbereichs liegt, wirken dann die Peltier-Elemente wie nachfolgend beschrieben.

Vorkonditionierung:

Eine thermische Vorkonditionierung des Fahrzeuges wird zumindest bei reinen Elektrofahrzeugen aufgrund der Beschränkung der Reichweite gegenüber konventionellen Fahrzeugen mit Verbrennungsmotor aus wirtschaftlichen Gründen besonders sinnvoll. Das Fahrzeug wird sowohl im Sommer (Kühlungsfall) als auch im Winter (Heizfall) vorkonditioniert, während es an einer externen Stromquelle angeschlossen ist. Dabei werden die Wärmekapazitäten des Kühlkreislaufes 1 mit seinen angekoppelten Wärmequellen (E-Motor, Leistungselektronik, Batterie etc.) auf eine Temperatur innerhalb des zulässigen Arbeitsbereiches dieser Komponenten temperiert. Im Heizfall ist dies eine Temperatur oberhalb des Umgebungsniveaus, etwa 30 °C, im Kühlungsfall liegt die Temperatur unterhalb des Umgebungsniveaus, etwa 10 °C.

Die Vorkonditionierung erlaubt, die Temperaturen des Wärmeübertragers 4 bzw. der Wärmequelle (im Heizfall) oder Wärmesenke (im Kühlfall) so weit wie möglich in der sinnvollen Richtung des Temperaturgefälles bezüglich der gewünschten Nutztemperatur (Raumluft, Sitz, Lenkrad, Kabinenluft, Cupholder etc.) zu optimieren. Dadurch wird zumindest für den Anfang die aufzuwendende Pumpleistung, d.h. der elektrische Energiebedarf, minimal (evtl. sogar Null, wenn die Zieltemperatur mittels der Vorkonditionierung erreicht werden kann).

Im Betrieb ist zwischen den Fällen einer Kühlung und einer Heizung zu unterscheiden.

1. Fall: Kühlbetrieb

Wärme wird mittels des zweiten Wärmepumpenglieds bzw. Peltier-Elements 5 von dem Passagierbereich in den Kühlkreislauf gepumpt, der an dieser Stelle eine höhere Temperatur als der Passagierbereich hat. Zudem wird Wärme von dem weiteren Peltier-Element 10 von dem Kühlkreislauf 1 in die Umgebungsluft gepumpt, welche eine höhere Temperatur als das Kühlmittel hat.

Im Kühlungsfall ist aufgrund der Vorkonditionierung die benötigte Pumpleistung zu Beginn der Fahrt gering. Die Kreislauftemperatur erhöht sich monoton, sowohl durch die Abwärme der Peltier-Elemente als auch durch weitere Abwärmen des Fahrzeuges. Ab einer bestimmten Kreislauftemperatur, die noch unterhalb der Umgebungstemperatur liegt, kann es bereits sinnvoll sein, die Temperaturerhöhung des Kreislaufes zu verlangsamen oder zu stoppen, indem Wärme über das erste Wärmepumpenglied 10 an die Umgebung gepumpt wird. Bei deutlicher Überschreitung der Umgebungstemperatur arbeitet der Wärmeübertrager 9 wie ein gewöhnlicher Kühler ohne elektrischen Energieverbrauch.

2. Fall: Heizbetrieb

Wärme wird mittels des zweiten Wärmepumpenglieds bzw. Peltier-Elements 5 dem Kühlkreislauf in den Passagierbereich gepumpt, der an dieser Stelle eine niedrigere Temperatur als der Kühlkreislauf hat. Zudem wird Wärme von dem weiteren Peltier-Element 10 von der Umgebungsluft in den Kühlkreislauf 1 gepumpt, welcher an dieser Stelle eine niedrigere Temperatur als das Kühlmittel hat.

Im Heizfall ist den (evtl. vorgewärmten) Wärmekapazitäten über den Wärmeübertager 5 mindestens so viel Wärme zu entziehen, dass diese ihre Temperatur halten können, d.h. die Abwärmeleistung (Elektromotor etc.) entspricht der Pumpleistung der thermoelektrischen Wärmepumpe. Höchstens ist soviel Wärme zu entziehen, dass die Wärmekapazitäten am Ende der Fahrt noch eine minimale Temperatur aufweisen, die für den Betrieb als sinnvoll erachtet wird (erforderliche Viskosität von Schmieröl etc.). Ab Erreichen einer bestimmten Temperatur wird es wirtschaftlich, im ersten Wärmeübertrager 9 zusätzlich Wärme aus der Umgebung in den Kreislauf zu pumpen und somit den Temperaturabfall zu verlangsamen, zu stoppen, oder die Kreislauftemperatur moderat zu erhöhen.

Zusammenfassend lässt sich sagen, dass zu Beginn einer Fahrt die Vorkonditionierung dominiert (Kreislauftemperatur nahe Nutztemperatur) und gegen Ende der (längeren) Fahrt der kaskadiert verschaltete Betrieb unter Ausnutzung der Umgebung dominiert (Kreislauftemperatur liegt zwischen Nutz- und Umgebungstemperatur).

Zur Optimierung der Wirkungsgrade der Peltier-Elemente und somit des elektrischen Energieverbrauchs werden die maximalen elektrischen Betriebsströme in Abhängigkeit von der angeforderten Pumpleistung der Peltier-Elemente gemäß folgender Beziehung geregelt:

$$I_G = \frac{Se}{R} \cdot T - \sqrt{\left(\frac{Se}{R} T\right)^2 - \frac{2 \cdot \left[KA \cdot \Delta T + \frac{\partial Q_c}{\partial t}\right]}{R}}$$

mit

T: Temperatur der Kaltseite des Wärmepumpenglieds,
$\Delta$T: Temperaturdifferenz über dem Wärmepumpenglied,
Se: Seebeck-Koeffizient,
R: Ohmscher Widerstand,
KA: Wärmedurchgangskoeffizient des Wärmepumpenglieds,
$\partial Q_c/\partial t$: Pumpleistung des Wärmepumpenglieds.

Fig. 2 verdeutlicht dies graphisch: Die Pumpleistung als Funktion des Betriebsstroms entspricht einer umgekehrten Parabel, die zumindest in guter Näherung ein Maximum bei der vorstehend genannten Beziehung aufweist. Bei Strömen unterhalb des Maximums ist die Leistung der Peltier-Elemente nicht voll genutzt, wobei ein Betrieb mit gutem Wirkungsgrad möglich ist (Betriebsbereich). Oberhalb des Maximums der Kälteleistung liegt der Fall einer Übersteuerung vor, wobei der zusätzliche elektrische Strom überwiegend in Verlustwärme umgewandelt wird.

**Patentansprüche**

1.  Heizsystem fur ein elektrisch antreibbares Fahrzeug, umfassend
    eine elektrische Antriebskomponente (3),
    einen elektrischen Energiespeicher,
    einen Kühlkreislauf (1) mit einem umlaufenden Kühlmittel zur Aufnahme von Abwärme der Antriebskomponente (3), und
    einen ersten Wärmeübertrager (9) zum Austausch von Wärme zwischen dem Kühlkreislauf (1) und Umgebungsluft (8),
    wober ein thermoelektrisches Wärmepumpenglied (5) über einen zweiten Wärmeübertrager (4) mit dem Kühlkreislauf (1) gekoppelt ist, um Wärme zwischen dem Kühlkreislauf (1) und einem Passagierbereich zu transportieren,
    **dadurch gekennzeichnet,**
    **dass** ein weiteres thermoelektrisches Wärmepumpenglied (10) an den ersten Wärmeübertrager (9) gekoppelt ist, um Wärme zwischen dem Kühlkreislauf (1) und der Umgebungsluft (8) zu transportieren.

2.  Heizsystem nach Anspruch 1, **dadurch gekennzeichnet, dass** der erste Wärmeübertrager (9) und der zweite Wärmeüberträger (4) durch den Kühlkreislauf (1) in unmittelbarer thermischer Verbindung stehen, insbesondere ohne dazwischen in dem Kühlkreislauf (1) angeordnete Wärmequellen oder Warmgesenken.

3.  Heizsystem nach Anspruch 1 oder 2, **dadurch gekennzeichnet, dass** eine Temperatur des Kühlkreislaufs (1) zwischen den beiden Wärmepumpengliedern (5, 10) zumindest in einer regelmäßigen Betriebsart in einem Bereich zwischen einer Nutztemperatur des Passagierbereichs (7) und einer Temperatur der Umgebungsluft (8) liegt.

4. Heizsystem nach einem der vorhergehenden Ansprüche, **dadurch gekennzeichnet, dass** an den Kühlkreislauf (1) ein WiderstandsHeizglied, insbesondere ein PTC-Heizglied, angeordnet ist.

5. Heizsystem nach einem der vorhergehenden Ansprüche, **dadurch gekennzeichnet, dass** ein weiterer Kühlkreislauf, insbesondere zur Kühlung des Energiespeichers, über ein weiteres Wärmepumpenglied thermisch an den Kühlkreislauf (1) angebunden ist.

6. Verfahren zum Betrieb eines Heizsystems nach einem der vorhergehenden Ansprüche, umfassend die Schritte:

   a. Bestimmen einer Temperatur des Kühlkreislaufes (1);
   b. Pumpen von Wärme mittels des ersten Wärmepumpenglieds (5) und des zweiten Warmepumpenglieds (10).

7. Verfahren nach Anspruch 6, **gekennzeichnet, durch** den Schritt:

   - Vergleichen der Kühlkreislauftemperatur (1) mit einer Nutztemperatur und der Umgebungstemperatur, und durchführen von Schritt b. nur dann, wenn die Kühlkreislauflemperatur zwischen der Umgebungstemperatur und der Nutztemperatur liegt.

8. Verfahren nach einem der Ansprüche 6 oder 7, **gekennzeichnet durch** den Schritt:

   Aufheizen oder Abkühlen eines Warmespeichers, insbesondere eines Fahrzeuginnenraums, des Küfilkreises und/oder der Antriebskomponente (3), während einer Verbindung des Fahrzeugs mit einer stationären Energiequelle.

9. Verfahren nach einem der Ansprüche 6 bis 8, **gekennzeichnet durch** den Schritt:

   Betreiben zumindest des zweiten Wärmepumpenglieds (5) mit einem Betriebsstrom nicht oberhalb eines Grenzstrom $I_G$, der im Wesentlichen **durch** folgende Gleichung gegeben ist:

$$I_G = \frac{Se}{R} \cdot T - \sqrt{\left(\frac{Se}{R} T\right)^2 - \frac{2 \cdot \left[ KA \cdot \Delta T + \frac{\partial Q_c}{\partial t} \right]}{R}}$$

   mit
   T: Temperatur der Kaltseite des Wärmepumpenglieds,
   $\Delta T$: Temperaturdifferenz über dem Wärmepumpenglied,
   Se: Seebeck-Koeffizient,
   R: Ohmscher Widerstand,
   KA: Wärmedurchgangskoeffizient des Wärmepumpenglieds,
   $\partial Q_c/\partial t$: Pumpleistung des Wärmepumpenglieds.

10. Verfahren nach einem der Ansprüche 6 bis 9, **gekennzeichnet durch** den Schritt:

   - Erwärmen des Kühlkreislaufs (1) mittels eines wasserseitigen Widerstands-Heizglieds, insbesondere eines PTC-Heizglieds.

**Claims**

1. Heating system for a vehicle that can be driven electrically, comprising: an electric drive component (3); an electric energy accumulator; a cooling circuit (1) comprising a circulating coolant for taking up waste heat from the drive component (3); and a first heat exchanger (9) for exchanging heat between the cooling circuit (1) and the ambient air (8); a thermoelectric heat pump element (5) being coupled to the cooling circuit (1) via a second heat exchanger (4) so as to transport heat between the cooling circuit (1) and a passenger compartment, **characterized in that** a further thermoelectric heat pump element (10) is coupled to the first heat exchanger (9) so as to transport heat between the cooling circuit (1) and the ambient air (8).

2. Heating system according to claim 1, **characterized in that** the first heat exchanger (9) and the second heat exchanger (4) are directly thermally connected by way of the cooling circuit (1), in particular without interposed heat sources or heat sinks in the cooling circuit (1).

3. Heating system according to claim 1 or 2, **characterized in that**, at least in a regular mode of operation, a temperature of the cooling circuit (1) between the two heat pump elements (5, 10) ranges between a usage temperature of the passenger compartment (7) and a temperature of the ambient air (8).

4. Heating system according to any one of the preceding claims, **characterized in that** a resistance heating element, in particular a PTC heating element, is disposed on the cooling circuit (1).

5. Heating system according to any one of the preceding claims, **characterized in that** a further cooling circuit, in particular for cooling the energy accumulator, is thermally connected to the cooling circuit (1) via a further heat pump element.

6. Method for operating a heating system according to any one of the preceding claims, comprising the following steps:

   a. determining a temperature of the cooling circuit (1); and
   b. pumping heat by way of the first heat pump element (5) and the second heat pump element (10).

7. Method according to claim 6, **characterized by** the following step:

   - comparing the cooling circuit temperature (1) to a usage temperature and the ambient temperature, and conducting step b. only if the cooling circuit temperature is between the ambient temperature and the usage temperature.

8. Method according to either claim 6 or 7, **characterized by** the following step:

   heating or cooling a heat accumulator, in particular of a vehicle interior, of the cooling circuit and/or of the drive component (3) while the vehicle is connected to a stationary energy source.

9. Method according to any one of claims 6 to 8, **characterized by** the following step:

   operating at least the second heat pump element (5) with an operating current that is not above a limit current $I_G$, which is essentially established by the following equation:

$$I_G = \frac{Se}{R} \cdot T - \sqrt{\left(\frac{Se}{R}T\right)^2 - \frac{2 \cdot \left[KA \cdot \Delta T + \frac{\partial Q_C}{\partial t}\right]}{R}}$$

   where

   T: temperature of the cold side of the heat pump element;
   ΔT: temperature difference across the heat pump element;
   Se: Seebeck coefficient;
   R: ohmic resistance;
   KA: heat transmission coefficient of the heat pump element;
   $\partial Q_C/\partial t$: pump output of the heat pump element.

10. Method according to any one of claims 6 to 9, **characterized by** the following step:

- heating the cooling circuit (1) by way of a resistance heating element on the water side, in particular a PTC heating element.

**Revendications**

1. Système de chauffage pour un véhicule pouvant être commandé électriquement, comprenant un composant d'entraînement électrique (3), un accumulateur d'énergie électrique, un circuit de refroidissement (1) comprenant un moyen de refroidissement en circulation servant à récupérer de la chaleur dissipée provenant du composant d'entraînement (3), et un premier échangeur de chaleur (9) servant à l'échange de chaleur entre le circuit de refroidissement (1) et l'air ambiant (8), où un élément de pompe à chaleur thermoélectrique (5) est couplé au circuit de refroidissement (1), via un deuxième échangeur de chaleur (4), pour transporter de la chaleur entre le circuit de refroidissement (1) et une zone des passagers, **caractérisé en ce qu'**un autre élément de pompe à chaleur thermoélectrique (10) est couplé au premier échangeur de chaleur (9), pour transporter de la chaleur entre le circuit de refroidissement (1) et l'air ambiant (8).

2. Système de chauffage selon la revendication 1, **caractérisé en ce que** le premier échangeur de chaleur (9) et le deuxième échangeur de chaleur (4) sont en liaison thermique directe à travers le circuit de refroidissement (1), en particulier sans sources de chaleur ni dissipateurs de chaleur disposés dans le circuit de refroidissement (1), entre ces échangeurs de chaleur.

3. Système de chauffage selon la revendication 1 ou 2, **caractérisé en ce qu'**une température du circuit de refroidissement (1), entre les deux éléments de pompe à chaleur (5, 10), se situe, au moins dans un mode de fonctionnement régulier, dans une plage comprise entre une température effective de la zone des passagers (7) et une température de l'air ambiant (8).

4. Système de chauffage selon l'une quelconque des revendications précédentes, **caractérisé en ce qu'**un élément chauffant à résistance, en particulier un élément chauffant à coefficient de température positif (PTC), est disposé sur le circuit de refroidissement (1).

5. Système de chauffage selon l'une quelconque des revendications précédentes, **caractérisé en ce qu'**un autre circuit de refroidissement, en particulier servant au refroidissement de l'accumulateur d'énergie, est raccordé thermiquement au circuit de refroidissement (1), par un autre élément de pompe à chaleur.

6. Procédé servant au fonctionnement d'un système de chauffage selon l'une quelconque des revendications précédentes, comprenant les étapes consistant:

   a. à déterminer une température du circuit de refroidissement (1);
   b. à pomper de la chaleur au moyen du premier élément de pompe à chaleur (5) et du deuxième élément de pompe à chaleur (10).

7. Procédé selon la revendication 6, **caractérisé par** l'étape consistant:

   - à comparer la température du circuit de refroidissement (1) à une température effective et à la température ambiante, et à effectuer l'étape b. seulement si la température du circuit de refroidissement se situe entre la température ambiante et la température effective.

8. Procédé selon l'une des revendications 6 ou 7, **caractérisé par** l'étape consistant:

   - à chauffer ou à refroidir un accumulateur de chaleur, en particulier de l'habitacle d'un véhicule, du circuit de refroidissement et/ou du composant d'entraînement (3), au cours d'un raccordement du véhicule à une source d'énergie fixe.

9. Procédé selon l'une quelconque des revendications 6 à 8, **caractérisé par** l'étape consistant:

   à faire fonctionner au moins le deuxième élément de pompe à chaleur (5) avec un courant de fonctionnement non supérieur à un courant limite $I_G$ qui est donné essentiellement par l'équation suivante:

$$I_G = \frac{Se}{R} \cdot T - \sqrt{\left(\frac{Se}{R}T\right)^2 - \frac{2 \cdot \left[KA \cdot \Delta T + \frac{\partial Q_c}{\partial t}\right]}{R}}$$

où

T: température du côté froid de l'élément de pompe à chaleur,
$\Delta T$: différence de température au-dessus de l'élément de pompe à chaleur,
Se: coefficient Seebeck,
R: résistance ohmique,
KA: coefficient de transmission de chaleur à travers l'élément de pompe à chaleur,
$\partial Q_c/\partial t$: puissance de pompage de l'élément de pompe à chaleur.

10. Procédé selon l'une quelconque des revendications 6 à 9, **caractérisé par** l'étape consistant:

- à chauffer le circuit de refroidissement (1) au moyen d'un élément chauffant à résistance, côté eau, en particulier au moyen d'un élément chauffant PTC.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006042160 A1